# EUROPÄISCHE PATENTSCHRIFT

(11) **EP 3 517 323 B1**
(45) Veröffentlichungstag und Bekanntmachung des Hinweises auf die Patenterteilung: **02.03.2022**
(21) Anmeldenummer: 18203921.4
(22) Anmeldetag: 01.11.2018
(51) Int. Cl.: B60C 11/24, B60C 19/00

(54) **FAHRZEUGREIFEN**
VEHICLE TYRES
PNEU DE VÉHICULE

(30) Priorität: 25.01.2018 DE 102018201149
(43) Veröffentlichungstag der Anmeldung: 31.07.2019
(73) Patentinhaber: Continental Reifen Deutschland GmbH, 30165 Hannover (DE)
(72) Erfinder: Kurz, Martin, 30161 Hannover (DE); Berger, Christoph, 30173 Hannover (DE); Busche, Joachim, 31157 Sarstedt (DE)
(74) Vertreter: Continental Corporation

(56) Entgegenhaltungen:
- EP-A1- 1 522 425
- WO-A1-2013/107281
- WO-A2-2006/098840
- US-A1- 2002 116 992
- US-A1- 2006 124 214
- US-A1- 2008 084 285

## Beschreibung

Die Erfindung betrifft einen Fahrzeugreifen.

Es ist bekannt, bei Fahrzeugreifen eine Reifendrucküberwachung einzusetzen, um einen Druckverlust sicher zu detektieren.

Außerdem gibt es unterschiedliche Ansätze, die Profiltiefe eines Fahrzeugreifens mit einem Reifensensor zu ermitteln. Die meisten bisherigen Konzepte wurden jedoch nicht umgesetzt, da sie unterschiedliche Nachteile besitzen. Einer der Nachteile besteht insbesondere darin, dass viele Sensoren eine eigene Energieversorgung in Form einer Batterie benötigen.

Die WO 2006/098840 A2, US 2006/124214 A1, WO 2013/107281 A1 und
EP 1 522 425 A1 offenbaren bekannte Vorrichtungen zur Bestimmung von Profitiefen von Fahrzeugreifen.

Der Erfindung lag die Aufgabe zugrunde, einen Fahrzeugreifen bereitzustellen, mit dem Fahrzeugreifen mit Reifensensoren verbessert werden können.

Gelöst wird die Aufgabe durch Anspruch 1.

Ein Vorteil der Erfindung ist insbesondere darin zu sehen, dass mit dem neuen Reifensensor der Profilabrieb im Fahrzeugreifen auf einfache Weise und automatisiert ermittelt werden kann.

Der einzelne Transponder oder eine Vielzahl von Transpondern sind in einem stiftförmigen Einbettungsmaterial angeordnet. Das stiftförmige Einbettungsmaterial mit den Transpondern lässt sich auf einfache Weise in bestimmten Bereichen des Laufstreifens anordnen. Außerdem lassen sich diese Form von Reifensensoren einfach vorkonfektionieren und können dann wie Reifenspikes in bestimmten Bereichen des Laufstreifens eingebracht werden. Die Transponder, die insbesondere einen RFID-Chip aufweisen, können außerdem auf einfache Weise mit entsprechenden Lesegeräten ausgelesen werden. Bei fortschreitenden Profilabrieb wird ebenfalls das stiftförmige Einbettungsmaterial mit den einzelnen Transpondern abgerieben. Wenn bei einer entsprechenden Abfrage keine Signale mehr von einem Transponder empfangen werden, lässt sich aus dieser Information der Profilabrieb beziehungsweise die Profilhöhe oder die Profiltiefe ermitteln. Ein weiterer wesentlicher Vorteil bei diesem Reifensensor besteht darin, dass der Sensor keine eigene Batterieversorgung benötigt und die Tranpondersignale über eine Funkverbindung ausgelesen werden können.

Es ist vorgesehen, dass der Reifensensor in Form eines Zylinders ausgebildet ist, wobei die Höhenabmessung des Zylinders größer ist als der Durchmesser des Zylinders.

Durch diese Form lässt sich der Reifensensor einfach und mit einer hohen Festigkeit in bestimmten Bereichen des Laufstreifens anordnen.

In einer weiteren vorteilhaften Weiterbildung der Erfindung ist vorgesehen, dass der Durchmesser des Reifensensors zwischen 2 und 10 mm beträgt.

Dadurch lässt sich der Reifensensor mit dem Transponder einfach und mit einer hohen Robustheit in einen Profilblock des Laufstreifens einsetzen.

In einer weiteren vorteilhaften Weiterbildung der Erfindung ist vorgesehen, dass das Einbettungsmaterial aus einer Kunststoffvergussmasse besteht.

Dadurch lässt sich der Reifensensor einfach vorkonfektionieren. Ein weiterer Vorteil der Kunststoffvergussmasse besteht in einer hohen Kompatibilität zum Gummimaterial des Laufstreifens.

In einer weiteren vorteilhaften Weiterbildung der Erfindung ist vorgesehen, dass der Reifensensor mit dem Transponder nach der Reifenvulkanisation in den Laufstreifen eingebracht wird.

Dadurch wird gewährleistet, dass die Transponder nicht bei der Reifenvulkanisation beschädigt werden.

In einer weiteren vorteilhaften Weiterbildung der Erfindung ist vorgesehen, dass der Reifensensor mit einer Bespikungsvorrichtung in einen vorkonfektionierten Hohlraum im Laufstreifen eingebracht wird.

Dadurch lassen sich die Reifensensoren einfach und schnell in bestimmte Bereiche des Laufstreifens einsetzen.

In einer weiteren vorteilhaften Weiterbildung der Erfindung ist vorgesehen, dass der Reifensensor über einen Kraftschluss, einen Formschluss, eine Klebeverbindung und/ oder einen Haftvermittler im Laufstreifen gehalten wird.

Dadurch lassen sich die Reifensensoren mit den Transpondern mit einer hohen Festigkeit im Laufstreifen fixieren. Bei einer kraftschlüssigen Verbindung würde der Lochdurchmesser des Hohlraums im Laufstreifen geringer sein als der Außendurchmesser des Reifensensors.

In einer weiteren vorteilhaften Weiterbildung der Erfindung ist vorgesehen, dass der Transponder in Form einer flachen Tablette mit einer Materialdicke zwischen 1 und 5 mm, vorzugsweise zwischen 1 und 2 mm, ausgebildet ist.

Dadurch lässt sich die Profiltiefe mit einer relativ hohen Genauigkeit bestimmen.

In einer weiteren vorteilhaften Weiterbildung der Erfindung ist vorgesehen, dass in einem Reifensensor eine Vielzahl von Transpondern stappelförmig übereinander angeordnet sind.

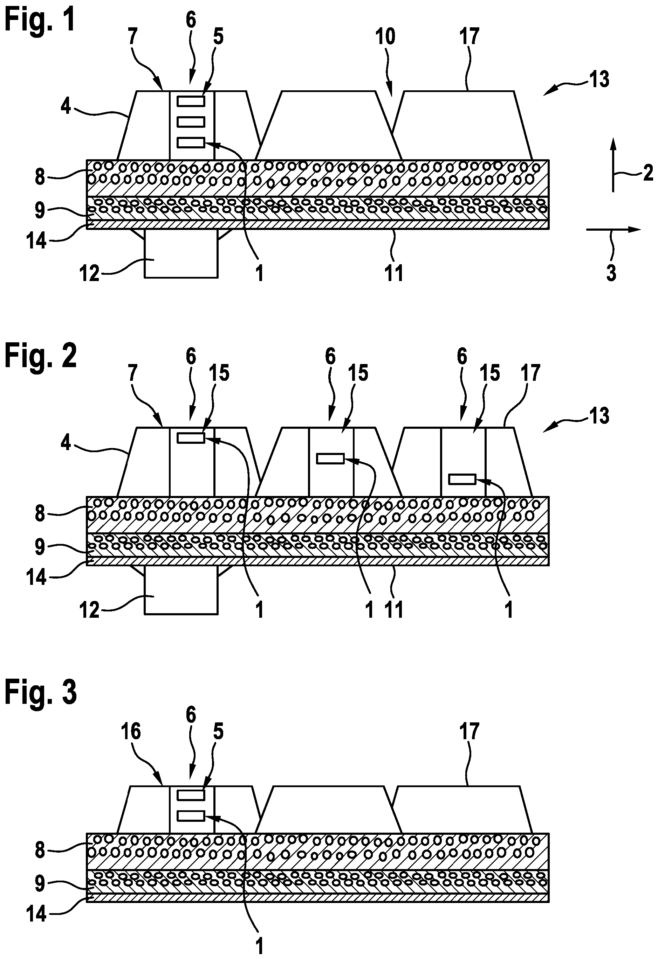

Ein entsprechendes Ausführungsbeispiel zeigt die Figur 1. Diese Ausführung lässt sich besonders einfach umsetzen, da nur ein einzelner Reifensensor in einem bestimmten Bereich des Laufstreifens angeordnet werden muss.

In einer weiteren vorteilhaften Weiterbildung der Erfindung ist vorgesehen, dass in einem Reifensensor jeweils ein Transponder angeordnet ist, wobei in benachbarten Profilklötzen weitere Reifensensoren angeordnet sind und die einzelnen Transponder in unterschiedlichen Abständen zur Laufstreifenoberfläche angeordnet sind.

Ein entsprechendes Ausführungsbeispiel zeigt die Figur 2. Bei dieser Ausführung werden mehrere Reifensensoren in bestimmten Bereichen des Laufstreifens beziehungsweise in bestimmten Profilblöcken platziert. Bei dieser Ausführung werden mehrere Bereiche des Laufstreifens im Hinblick auf die Profiltiefe überwacht.

In einer weiteren vorteilhaften Weiterbildung der Erfindung ist vorgesehen, dass der Transponder mit einer im Fahrzeugreifen angeordneten Sekundärantenne gekoppelt ist. Dadurch lässt die Sende- und Empfangsreichweite des Transponders erheblich erhöhen.

In einer weiteren vorteilhaften Weiterbildung der Erfindung ist vorgesehen, dass die Sekundärantenne durch Gürteldrähte des Reifengürtels gebildet wird.

Dadurch kann darauf verzichtet werden, eine separate Sekundärantenne im Reifen anzuordnen.

In einer weiteren vorteilhaften Weiterbildung der Erfindung ist vorgesehen, dass die Sekundärantenne durch leitfähiges Gummimaterial gebildet wird, wobei das leitfähige Gummimaterial im Fahrzeugreifen in Form einer Antenne angeordnet ist.

Das leitfähige Gummimaterial hat den Vorteil, dass es eine hohe Kompatibilität zum Gummimaterial des Reifens besitzt.

In einer weiteren vorteilhaften Weiterbildung der Erfindung ist vorgesehen, dass der Abstand des Transponders zur Laufstreifenoberfläche nach einer Röntgenuntersuchung bestimmt wird, wobei der Abstand durch einen Speicher des Transponders erfasst wird.

Dadurch lässt sich die Profiltiefe des Reifens mit einer hohen Genauigkeit erfassen.

In einer weiteren vorteilhaften Weiterbildung der Erfindung ist vorgesehen, dass der Transponder mit einem Reifenmodul im Fahrzeugreifen gekoppelt ist, wobei das Reifenmodul eine autarke Sende- und Empfangseinheit aufweist.

Dadurch lassen sich Messsignale von dem Transponder auf einfache Weise zu einer Sende- und Empfangseinheit im Fahrzeug übertragen.

Anhand eines Ausführungsbeispiels wird die Erfindung im Folgenden näher beschrieben.

Es zeigen:
Fig. 1: einen Reifenabschnitt in einer Radialschnittansicht mit einem Reifensensor
Fig. 2: einen Reifenabschnitt in einer Radialschnittansicht mit drei Reifensensoren
Fig. 3: einen Reifenabschnitt mit reduzierter Profilhöhe

Die Figur 1 zeigt schematisch einen Reifenabschnitt mit dem Laufstreifen 13 und der Reifeninnenseite 11 in einer Radialschnittansicht.

Die Figur zeigt drei nebeneinander angeordnete Profilblöcke beziehungsweise Profilklötze 4 des Laufstreifens 13. Der dargestellte Abschnitt umfasst ebenfalls ein Gürtelpaket 8, Karkasslagen 9, einen Reifeninnerliner 14 und Umfangsrillen 10. Der Reifensensor 6 besteht aus drei übereinander gestapelten Transpondern 1, die in ein stiftförmiges Einbettungsmaterial 5 eingebettet sind. Das Einbettungsmaterial besteht vorzugsweise aus einer Kunststoffvergussmasse und umschließt die Transponder 1 vollständig. Der Reifensensor 6 mit dem Einbettungsmaterial und den Transpondern 1 weist eine zylinderförmige Kontur auf, die einem Reifenspike ähnlich ist. Der Reifensensor 6 wird vorkonfektioniert und nach der Reifenvulkanisation in einen Hohlraum des Profilblockes 4 eingesetzt. Die Fixierung des Reifensensors 6 erfolgt beispielsweise über einen Kraftschluss. Außerdem ist denkbar, den Reifensensor mit einem Klebematerial im Profilblock zu fixieren.

Der Reifensensor 6 schließt an der Oberseite mit der Laufstreifenoberfläche 17 ab, die bei einem Neureifen die Profiltiefe bzw. Profilhöhe 7 anzeigt. In unmittelbarer Nähe zum Reifensensor 6 ist auf der Reifeninnenseite 11 ein Reifenmodul 12 angeordnet, welches über eine autarke Sende- und Empfangseinheit verfügt. Die drei dargestellten Transponder können Signale direkt an das Reifenmodul 12 übertragen. Das Reifenmodul 12 leitet die empfangenen Signale an eine Sende- und Empfangseinheit im Fahrzeug weiter. Bei einem zunehmenden Profilabrieb verschwindet zunächst der oberste Transponder 1. Wenn das Signal des obersten Transponders nicht mehr empfangen wird, lässt sich aus dieser Information die verbleibende Profiltiefe bestimmen.

Bei der Sekundärantenne kann es sich beispielsweise um eine Antenne handeln, die aus leitfähigem Gummi besteht und auf der Reifeninnenseite angeordnet ist. Der unterste Transponder 1 ist in unmittelbarer Nähe zum Profilgrund angeordnet. Wenn von diesem Transponder kein Signal mehr empfangen wird, hat der Reifen die Mindestprofiltiefe erreicht. In diesem Fall würde ein entsprechendes Signal an die Sende- und Empfangseinheiten im Fahrzeug weitergeleitet werden.

Die Figur 2 zeigt ein weiteres Ausführungsbeispiel. Bei dieser Ausführung sind eine Vielzahl von Reifensensoren 6 in unterschiedlichen Bereichen des Laufstreifens 13 angeordnet. Die Transponder 1 sind wieder jeweils in ein stiftförmiges Einbettungsmaterial 15 eingebettet. Die Transponder 1 haben jeweils einen unterschiedlichen Abstand zur Laufstreifenoberfläche 17. Die Reifensensoren sind in nebeneinander liegenden Profilblöcken 4 angeordnet. Dadurch kann die Profiltiefe in unterschiedlichen Bereichen des Laufstreifens überwacht werden. Alle Reifensensoren 6 können ihre Signale direkt an das Reifenmodul 12 übertragen.

Bei einer anderen Ausführung ist es ebenfalls möglich, dass die Reifensensoren direkt mit einem Handlesegerät kommunizieren, welches an den Fahrzeugreifen gehalten wird. Bei dieser Ausführung wäre es nicht notwendig, auf der Reifeninnenseite ein entsprechendes Reifenmodul 12 anzuordnen.

Bei einer weiteren Ausführung sind Lesegeräte im Boden einer Autowerkstatt angeordnet. Sobald das Fahrzeug das Lesegerät passiert, werden die Daten der Reifensensoren automatisch ausgewertet. Die Werkstatt, ein Fahrzeugdisplay oder ein Fuhrparkmanagement würden anschließend direkt Informationen zur Profiltiefe der Fahrzeugreifen erhalten.

Die Figur 3 zeigt das Ausführungsbeispiel in der Figur 1 nach einer reduzierten Profiltiefe aufgrund eines Profilabriebes. Der Reifensensor 6 weist aufgrund des Profilabriebes nur noch zwei Transponder 1 auf. Der oberste Transponder 1 würde kein Signal mehr senden. Aus dieser Information lässt sich die verbleibende Profiltiefe des Fahrzeugreifens auf einfache Weise ermitteln.

### Bezugszeichenliste

### (Teil der Beschreibung)

- 1: Transponder
- 2: Radiale Richtung des Fahrzeugreifens
- 3: Axiale Richtung des Fahrzeugreifens
- 4: Profilblock bzw. Profilklotz
- 5: Stiftförmiges Einbettungsmaterial mit übereinander gestapelten Transpondern
- 6: Reifensensor mit Einbettungsmaterial und Transponder
- 7: Profilhöhe bzw. Profiltiefe bei einem Neureifen
- 8: Reifengürtel mit Gürteldrähten
- 9: Karkasslagen
- 10: Umfangsrille
- 11: Reifeninnenseite
- 12: Reifenmodul
- 13: Laufstreifen
- 14: Reifeninnerliner
- 15: Stiftförmiges Einbettungsmaterial mit jeweils einem Transponder
- 16: Reduzierte Profilhöhe bzw. Profiltiefe nach einem Profilabrieb
- 17: Laufstreifenoberfläche bzw. Laufstreifenoberseite

## Patentansprüche

1. Fahrzeugreifen mit einem Laufstreifen (19) mit Profilblöcken (4), einer Karkasslage (9), einem Reifengürtel (8), Seitenwänden und einer Reifeninnenseite (11),
wobei im Fahrzeugreifen ein Reifensensor zur Messung eines Profilabriebes angeordnet ist,
in mindesteins einem Profilblock (4) des Laufstreifens (13) ein Reifensensor (6) angeordnet ist,
wobei der Reifensensor (6) ein stiftförmiges Einbettungsmaterial (5,15) mit mindestens einem Transponder (1) umfasst,
wobei die Transponder (1) im Einbettungsmaterial (5,15) in einem vorgegeben Abstand zur Laufstreifenseite (17) eingebettet sind,
wobei bei einem Profilabrieb des Fahrzeugreifens die Anzahl der Transponder (1) reduziert wird und
über eine Auswertung der Anzahl der Transponder (1) im Einbettungsmaterial (5,15) der Profilabrieb bestimmt werden kann,
**dadurch gekennzeichnet, dass**
der Reifensensor (6) in Form eines Zylinders ausgebildet ist,
wobei die Höhenabmessung des Zylinders größer ist als der Durchmesser des Zylinders.

2. Fahrzeugreifen nach Anspruch 1,
**dadurch gekennzeichnet, dass**
der Durchmesser des Reifensensors (6) zwischen 2 und 10 mm beträgt.

3. Fahrzeugreifen nach einem der vorhergehenden Ansprüche,
**dadurch gekennzeichnet, dass**
das Einbettungsmaterial (5,15) aus einer Kunststoffvergussmasse besteht.

4. Fahrzeugreifen nach einem der vorhergehenden Ansprüche,
**dadurch gekennzeichnet, dass**
der Reifensensor (6) mit dem Transponder (1) nach der Reifenvulkanisation in den Laufstreifen (13) eingebracht wird.

5. Fahrzeugreifen nach einem der vorhergehenden Ansprüche,
**dadurch gekennzeichnet, dass**
das stiftförmige Einbettungsmaterial (5,15) mit einer Bespikungsvorrichtung in einen vorkonfektionierten Hohlraum im Laufstreifen (13) eingebracht wird.

6. Fahrzeugreifen nach einem der vorhergehenden Ansprüche,
**dadurch gekennzeichnet, dass**
der Reifensensor (6) über einen Kraftschluss, einen Formschluss, eine Klebeverbindung und/ oder einen Haftvermittler im Laufstreifen (13) gehalten wird.

7. Fahrzeugreifen nach einem der vorhergehenden Ansprüche,
**dadurch gekennzeichnet, dass**
der Transponder (1) in Form einer flachen Tablette mit einer Materialdicke zwischen 1 und 5 mm ausgebildet ist.

8. Fahrzeugreifen nach einem der vorhergehenden Ansprüche,
**dadurch gekennzeichnet, dass**
in einem Reifensensor (6) eine Vielzahl von Transpondern (1) stappelförmig übereinander angeordnet sind.

9. Fahrzeugreifen nach einem der vorhergehenden Ansprüche,
**dadurch gekennzeichnet, dass**
in einem Reifensensor (6) jeweils ein Transponder (1) angeordnet ist, wobei in benachbarten Profilklötzen (4) weitere Reifensensoren (6) angeordnet sind und die einzelnen Transponder (1) in unterschiedlichen Abständen zur Laufstreifenoberfläche (17) angeordnet sind.

10. Fahrzeugreifen nach einem der vorhergehenden Ansprüche,
**dadurch gekennzeichnet, dass**
der Transponder (1) eine Primärantenne aufweist und mit einer im Fahrzeugreifen angeordneten Sekundärantenne gekoppelt ist.

11. Fahrzeugreifen nach einem der vorhergehenden Ansprüche,
**dadurch gekennzeichnet, dass**
die Sekundärantenne durch Gürteldrähte des Reifengürtels (8) gebildet wird.

12. Fahrzeugreifen nach einem der vorhergehenden Ansprüche,
**dadurch gekennzeichnet, dass**
die Sekundärantenne durch leitfähiges Gummimaterial gebildet wird, wobei das leitfähige Gummimaterial im Fahrzeugreifen in Form einer Antenne angeordnet ist.

13. Fahrzeugreifen nach einem der vorhergehenden Ansprüche,
**dadurch gekennzeichnet, dass**
der Abstand des Transponders (1) zur Laufstreifenoberfläche (17) nach einer Röntgenuntersuchung bestimmt wird,
wobei der Abstand durch einen Speicher des Transponders (1) erfasst wird.

14. Fahrzeugreifen nach einem der vorhergehenden Ansprüche,
**dadurch gekennzeichnet, dass**
der Transponder (1) mit einem Reifenmodul (12) im Fahrzeugreifen gekoppelt ist, wobei das Reifenmodul (12) eine autarke Sende- und Empfangseinheit aufweist.

## Claims

1. Vehicle tyre having a tread (19) with profile blocks (4), a carcass ply (9), a tyre belt (8), sidewalls and a tyre inner side (11),
wherein a tyre sensor for measuring profile abrasion is arranged in the vehicle tyre,
a tyre sensor (6) is arranged in at least one profile block (4) of the tread (13),
wherein the tyre sensor (6) comprises an embedding material (5, 15) in the form of a pin with at least one transponder (1),
wherein the transponders (1) are embedded in the embedding material (5, 15) at a predetermined distance from the tread side (17),
wherein, when there is profile abrasion of the vehicle tyre, the number of transponders (1) is reduced and
the profile abrasion can be determined by an evaluation of the number of transponders (1) in the embedding material (5, 15),
**characterized in that**
the tyre sensor (6) takes the form of a cylinder, wherein the height dimension of the cylinder is greater than the diameter of the cylinder.

2. Vehicle tyre according to Claim 1,
**characterized in that**
the diameter of the tyre sensor (6) is between 2 and 10 mm.

3. Vehicle tyre according to one of the preceding claims,
**characterized in that**
the embedding material (5, 15) consists of a plastics potting compound.

4. Vehicle tyre according to one of the preceding claims,
**characterized in that**
the tyre sensor (6) with the transponder (1) is introduced into the tread (13) after the vulcanizing of the tyre.

5. Vehicle tyre according to one of the preceding claims,
**characterized in that**
the embedding material (5, 15) in the form of a pin is introduced into a prefabricated cavity in the tread (13) by a spiking device.

6. Vehicle tyre according to one of the preceding claims,
**characterized in that**
the tyre sensor (6) is held in the tread (13) by a force fit, a form fit, an adhesive bond and/or a bonding agent.

7. Vehicle tyre according to one of the preceding claims,
**characterized in that**
the transponder (1) takes the form of a flat tablet with a material thickness of between 1 and 5 mm.

8. Vehicle tyre according to one of the preceding claims,
**characterized in that**
a multiplicity of transponders (1) are arranged one on top of the other in the form of a stack in the tyre sensor (6).

9. Vehicle tyre according to one of the preceding claims,
**characterized in that**
a transponder (1) is respectively arranged in a tyre sensor (6),
wherein further tyre sensors (6) are arranged in adjacent profile blocks (4) and the individual transponders (1) are arranged at different distances from the tread surface (17).

10. Vehicle tyre according to one of the preceding claims,
**characterized in that**
the transponder (1) has a primary antenna and is coupled to a secondary antenna arranged in the vehicle tyre.

11. Vehicle tyre according to one of the preceding claims,
**characterized in that**
the secondary antenna is formed by belt wires of the tyre belt (8).

12. Vehicle tyre according to one of the preceding claims,
**characterized in that**
the secondary antenna is formed by conductive rubber material,
wherein the conductive rubber material is arranged in the vehicle tyre in the form of an antenna.

13. Vehicle tyre according to one of the preceding claims, **characterized in that** the distance of the transponder (1) from the tread surface (17) is determined by an x-ray examination, wherein the distance is recorded by a memory of the transponder (1).

14. Vehicle tyre according to one of the preceding claims,
**characterized in that**
the transponder (1) is coupled to a tyre module (12) in the vehicle tyre,
wherein the tyre module (12) has an autonomous transmitting and receiving unit.

## Revendications

1. Pneumatique de véhicule comprenant une bande de roulement (19) pourvue de blocs de sculpture (4), une nappe de carcasse (9), une ceinture de pneumatique (8), des parois latérales et un côté de pneumatique intérieur (11),
un capteur de pneumatique destiné à mesurer l'usure de la bande de roulement étant disposé dans le pneumatique de véhicule,
un capteur de pneumatique (6) étant disposé dans au moins un bloc de sculpture (4) de la bande de roulement (13),
le capteur de pneumatique (6) comprenant un matériau d'enrobage (5, 15) en forme de tige pourvu d'au moins un transpondeur (1),
les transpondeurs (1) étant incorporés dans le matériau d'enrobage (5, 15) à une distance spécifiée du côté bande de roulement (17),
le nombre de transpondeurs (1) étant réduit en cas d'usure des sculptures du pneumatique de véhicule et l'usure des sculptures pouvant être déterminée par évaluation du nombre de transpondeurs (1) dans le matériau d'enrobage (5, 15),
**caractérisé en ce que** le capteur de pneumatique (6) est conçu sous la forme d'un cylindre,
la dimension en hauteur du cylindre étant supérieure au diamètre du cylindre.

2. Pneumatique de véhicule selon la revendication 1, **caractérisé en ce que**
le diamètre du capteur de pneumatique (6) est compris entre 2 et 10 mm.

3. Pneumatique de véhicule selon l'une des revendications précédentes,
**caractérisé en ce que**
le matériau d'enrobage (5, 15) comprend une matière de remplissage synthétique.

4. Pneumatique de véhicule selon l'une des revendications précédentes,
**caractérisé en ce que**
le capteur de pneumatique (6) est introduit avec le transpondeur (1) dans la bande de roulement (13) après la vulcanisation du pneumatique.

5. Pneumatique de véhicule selon l'une des revendications précédentes,
**caractérisé en ce que**
le matériau d'enrobage (5, 15) en forme de tige est introduit dans une cavité préfabriquée dans la bande de roulement (13) avec un dispositif à pointes.

6. Pneumatique de véhicule selon l'une des revendications précédentes,
**caractérisé en ce que**
le capteur de pneumatique (6) est maintenu dans la bande de roulement (13) par une liaison en force, une liaison par complémentarité de formes, une liaison adhésive et/ou un promoteur d'adhérence.

7. Pneumatique de véhicule selon l'une des revendications précédentes,
**caractérisé en ce que**
le transpondeur (1) est conçu sous la forme d'une tablette plate ayant une épaisseur de matière comprise entre 1 et 5 mm.

8. Pneumatique de véhicule selon l'une des revendications précédentes,
**caractérisé en ce que**
une grand nombre de transpondeurs (1) sont disposés les uns au-dessus des autres dans un capteur de pneumatique (6) sous la forme d'un empilage.

9. Pneumatique de véhicule selon l'une des revendications précédentes,
**caractérisé en ce que**
un transpondeur (1) est disposé dans chaque capteur de pneumatique (6),
d'autres capteurs de pneumatique (6) étant disposés dans des blocs de sculpture adjacents (4) et les transpondeurs individuels (1) étant disposés à différentes distances de la surface (17) de la bande de roulement.

10. Pneumatique de véhicule selon l'une des revendications précédentes,
**caractérisé en ce que**
le transpondeur (1) comporte une antenne primaire et est couplé à une antenne secondaire disposée dans le pneumatique du véhicule.

11. Pneumatique de véhicule selon l'une des revendications précédentes,
**caractérisé en ce que**
l'antenne secondaire est formée par des fils de la ceinture de pneumatique (8).

12. Pneumatique de véhicule selon l'une des revendications précédentes,
**caractérisé en ce que**
l'antenne secondaire est en caoutchouc conducteur,
le caoutchouc conducteur étant disposé dans le pneumatique de véhicule sous la forme d'une antenne.

13. Pneumatique de véhicule selon l'une des revendications précédentes,
**caractérisé en ce que**
la distance entre le transpondeur (1) et la surface (17) de la bande de roulement est déterminée après un examen aux rayons X,
la distance étant enregistrée par une mémoire du transpondeur (1).

14. Pneumatique de véhicule selon l'une des revendications précédentes,
**caractérisé en ce que**
le transpondeur (1) est couplé à un module de pneumatique (12) situé dans le pneumatique du véhicule, le module de pneumatique (12) comportant une unité d'émission et de réception autonome.
